# EUROPEAN PATENT SPECIFICATION

(11) **EP 3 822 544 B1**
(45) Date of publication and mention of the grant of the patent: **19.10.2022**
(21) Application number: 20207465.4
(22) Date of filing: 13.11.2020
(51) Int. Cl.: F24D 13/02, H05B 3/32

(54) **MOUNTING DEVICE FOR AN INFRARED HEATING SYSTEM**
MONTAGEVORRICHTUNG FÜR EIN INFRAROTHEIZSYSTEM
DISPOSITIF DE MONTAGE POUR UN SYSTÈME DE CHAUFFAGE À INFRAROUGE

(30) Priority: 13.11.2019 BE 201905781
(43) Date of publication of application: 19.05.2021
(73) Proprietor: SPECTRA BV, 3640 Kinrooi (BE)
(72) Inventor: Kollenburg, Jordi, 3640 Kinrooi (BE)
(74) Representative: De Clercq & Partners

(56) References cited:
- AT-U1- 13 338
- CN-U- 207 674 559
- DE-U1-202011 050 894
- GB-A- 1 078 331
- KR-A- 20170 120 773

## Description

### TECHNICAL FIELD

The invention is in the field of mounting devices for a heating panel such as an electric or infrared heating panel. In particular the invention provides a device for mounting a heating panel, such as an electric or infrared heating panel, on a surface, such as a ceiling or wall. The invention also relates to a heating system comprising the device and a heating panel, such as an electric or infrared heating panel. The invention also relates to the use of the device and the heating system. The invention also relates further to a method for mounting and/or dismounting a heating panel on/from a surface, such as a ceiling or wall.

### TECHNOLOGICAL BACKGROUND OF THE INVENTION

An electric heating panel can be used for heating homes and offices. Said electric heating panel typically consists of a heating panel in which a heating layer is incorporated that contains an electrically conductive material such as copper wire, carbon and/or conductive additives in a binder. On applying a voltage to said layer, it heats up. This may be combined with the emission of infrared radiation. This infrared radiation is perceived by persons in the room as pleasant heat, with the consequence that even at a lower temperature of the room, subjectively a greater feeling of heat is created so that in general these electric panels are energy-efficient. Various forms of heating panels are available on the market, consisting of glass, ceramics, aluminium, and other types of materials. Glass heating panels in particular are provided with safety glass, which can direct the dispersion of the heating such as infrared radiation to a limited extent. On the back, the heating panels are preferably well insulated so that as little heat as possible will be lost.

A heating panel may inter alia be secured to a wall by means of a mounting bracket, or be suspended on a ceiling by means of cables. These mounting accessories ensure that there is a clear space between the heating panel and the wall or ceiling. Since in modern house building there is in particular a demand for a minimalist look, characterized by total integration of the heating panel, it is often chosen to fasten the heating panel directly to the wall or ceiling. However, the size and weight of a typical heating panel require the presence of at least two technicians to support the panel adequately during mounting. These technicians must often fasten the heating panels in a space with a limited view and freedom of movement. Therefore the mounting of heating panels may proceed particularly slowly and awkwardly. In addition, removal of these fully integrated panels may often be difficult or not even possible at all without damaging the wall or ceiling, for example for maintenance work or replacement of a defective panel.

Thus, there is a need for a device that offers a solution to one or more of the aforementioned problems. There is in particular a need for a device that allows easier, more user-friendly and/or quicker mounting or dismounting of a heating panel. There is also a need for a device that makes it possible to mount a heating panel without making use of conventional fastening elements, without compromising stability and durability. Moreover, there is also a need for a device that allows all mounting components to be hidden from view almost completely, for total integration in a living space or work space. On the other hand there is also a need for a heating panel that looks good when it is integrated in a wall, preferably as inconspicuously as possible and that at the same time allows and ensures efficient heating of the space.

DE 20 2011 050 894 U1 discloses a mounting device known from the prior art.

### SUMMARY

The present invention and the preferred embodiments thereof aim to offer a solution to one or more of the aforementioned drawbacks. For this purpose, the present invention relates to a device according to claim 1 for mounting a panel, such as an electric or infrared heating panel, on a surface, such as a ceiling or wall. The invention also relates to a heating system according to claim 8 comprising the device and the heating panel. The invention also relates to the use of the device according to claim 14 and the use of the heating system according to claim 15.

The invention also further relates to a method for mounting and/or dismounting a panel on or from a surface, such as a ceiling or wall according to claims 12 and 13 respectively.

The device can allow a heating panel to be mounted on a surface with little if any damage to the panel and/or the fastening surface. In addition, the device can hide the (mechanical) components of the underlying frames and/or fastening elements from view almost completely and thus provide total integration of the heating panel in or on the fastening surface. Moreover, the device can also allow the panel to be mounted and/or dismounted without making use of conventional fastening elements. The mounting and/or dismounting of the panel can then proceed in an easier, more user-friendly and/or quicker manner. In particular, the device can provide mounting and/or dismounting of the panel by just one person (e.g. a technician or electrician). The mounting and/or dismounting of the panel can then also proceed more safely and/or durably. In particular, the device can be provided with failure protection, which can increase the safety of nearby persons (such as a technician or end user) and objects. One aspect of the invention relates to a device for mounting a, preferably electric, heating panel to a surface such as a wall or ceiling, the device comprising: a panel frame that is fastened or fastenable to the heating panel, comprising at least two upright clamping springs fitted to both sides of the panel frame; and suspension frame that is fastened or fastenable to the surface; comprising at least one and preferably two suspension cables, which at a first end are anchored to the suspension frame and at a second end are provided with a means for suspending the panel frame, and provided with at least two clamping spring openings on both sides of the suspension frame with a diameter suitable for inserting a clamping spring; arranged in such a way that the panel frame can be click-coupled to the suspension frame by fixing the at least two clamping springs in the suspension frame through the clamping spring openings.

In preferred embodiments, the clamping spring has an upright body provided with a compressible member projecting outwardly from the body of the clamping spring, which is compressible against or in the direction of the upright body of the clamping spring. In preferred embodiments, the outwardly projecting clamping spring member is set at an angle relative to the upright body of the clamping spring; preferably an angle from at least 1° to at most 45°, more preferably 3° to 30°, even more preferably 4° to 25°, even more preferably 5° to 20°, even more preferably 9° to 15°, for example 11°.

In preferred embodiments the suspension frame is provided with at least two decoupling openings on both sides of the suspension frame, arranged in such a way that the clamping springs can be decoupled through the decoupling openings; preferably provided on an outer frame wall of the suspension frame.

In preferred embodiments the panel frame comprises a laterally projecting suspension plate on which the suspension cable can be fastened, preferably repeatedly; preferably wherein the suspension plate is provided on an inner frame wall of the panel frame.

In preferred embodiments, the second end of the suspension cable is provided with a fastening clip, hook, eye or clasp.

In preferred embodiments, the suspension frame comprises a supporting or bearing plate against which the panel frame is placed; preferably wherein the supporting or bearing plate is provided on a bottom frame wall of the suspension frame.

A further aspect of the invention relates to a heating system comprising: a device according to one or more embodiments as described herein, a heating panel, preferably an electric heating panel, preferably an infrared heating panel, and optionally a power supply for powering the heating panel and/or a control element for switching on the heating panel.

A further aspect of the invention relates to a, preferably electric, heating panel comprising a glass plate with a front and an opposite back wherein the back comprises a coat of paint, a layer with metal strips, and an electric heating layer, wherein the electric heating layer contains a binder with one or more conductive additives distributed therein.

In preferred embodiments, the glass of the glass plate has a composition wherein the amount of iron (expressed in the form of Fe₂O₃) is not greater than 0.03 wt.% relative to the total weight of the glass and an amount of copper of not more than 0.15%, wherein the percentage by weight (wt.%) is expressed relative to the total weight of the glass, and/or wherein the energy transmission measured for a thickness of the glass of 3.85 mm according to ISO9050 and a wavelength range between 300 and 2500 nm, is at least 90%.

In preferred embodiments, the binder of the heating layer is a non-conductive polymer and/or the metal strips are copper strips, and/or the conductive additives are selected from the group consisting of graphite, carbon black and a combination of the two, and/or the glass has a composition containing 60-78% SiO₂, 0-10% Al₂O₃, 0-5% B₂O₃, 0-15% CaO, 0-10% MgO, 5-20% Na₂O, 0-10% K₂O and 0-5% BaO wherein the percentage by weight (wt.%) is expressed relative to the total weight of the glass.

A further aspect of the invention relates to a method for mounting a, preferably electric, heating panel with a device according to one or more embodiments as described herein, the method comprising the steps:
(a) optionally, fastening a heating panel to a panel frame; preferably fastening with a fastener, such as a nail or a screw;
(b) optionally, fastening a suspension frame to a surface, such as a wall or ceiling; preferably fastening with a fastener, such as a nail or a screw;
(c) fastening a suspension cable of the suspension frame to a first side of the panel frame for suspending the panel frame; preferably fastening to a laterally projecting suspension plate provided near or on a first clamping spring;
(d) coupling a second, opposite side of the panel frame to the suspension frame; preferably by clamping a second, opposite clamping spring in the suspension frame;
(e) coupling the first side of the panel frame to the suspension frame; preferably by clamping the first clamping spring in the suspension frame.

A further aspect of the invention relates to a method for dismounting a, preferably electric, heating panel from a device according to one or more embodiments as described herein, the method comprising the steps:
(A) decoupling a first side of the panel frame from the suspension frame; preferably by unclamping a first clamping spring from the suspension frame;
(B) extending a suspension cable provided between the panel frame and suspension frame for suspending the panel frame; preferably by allowing the first side of the panel frame to drop down;
(C) decoupling a second, opposite side of the panel frame from the suspension frame; preferably by unclamping a second, opposite clamping spring from the suspension frame;
(D) optionally, allowing the second side of the panel frame to drop down;
(E) releasing the suspension cable from the suspension frame of the panel frame;
(F) optionally, releasing the heating panel from the panel frame.

A further aspect of the invention relates to a use of the device according to one or more embodiments as described herein for mounting and/or dismounting a, preferably electric, heating panel on or from a surface, such as a wall or ceiling.

A further aspect of the invention relates to a use of the electric heating system according to one or more embodiments as described herein for heating a space and/or object.

### DESCRIPTION OF THE FIGURES

For better illustration of the features of the invention, some preferred embodiments of the present invention are described in the appended figures, without any limiting character. The numerical references are discussed in more detail in the examples.

The following numbering is adopted throughout the figures, claims, and examples: 10 - device; 50 - heating panel; 70- power supply; 100 - panel frame; 150 - clamping spring; 155 - clamping spring member; 160 - suspension plate; 200 - suspension frame; 230 - supporting plate; 250 - suspension cable; 260 - suspending means; 270 - suspension cable anchorage.
**Fig. 1A** is a schematic top view of a device (10) according to a preferred embodiment.
**Fig. 1B** is a schematic side view of a device (10) according to a preferred embodiment.
**Fig. 2A** is a perspective top view of a device (10) according to a preferred embodiment.
**Fig. 2B** is a perspective bottom view of a device (10) according to a preferred embodiment.
**Fig. 3A** is a schematic top view of a device (10) according to a preferred embodiment.
**Fig. 3B** is a schematic side view of a device (10) according to a preferred embodiment.
**Fig. 4A** is a perspective top view of a device (10) according to a preferred embodiment.
**Fig. 4B** is a perspective top view of a device (10) according to a preferred embodiment.
**Fig. 4C** is a perspective bottom view of a device (10) according to a preferred embodiment.
**Fig. 5A** is a schematic side view of a clamping spring (250) according to a preferred embodiment.
**Fig. 5B** is a schematic side view of a device (10) with a clamped clamping spring (250) according to a preferred embodiment.
**Figs. 6A-D** illustrate schematically how a heating panel (50) can be mounted on a device (10).
**Figs. 7A-D** illustrate schematically how a heating panel (50) can be dismounted from a device (10).

### DETAILED DESCRIPTION

Before the present system and method according to the invention are described, it is to be understood that the present invention is not limited to specific systems and methods or combinations that are described, since such systems and methods and combinations may of course vary. It should also be pointed out that the terminology used herein is not meant as limiting, since the scope of the present invention is only limited by the appended claims.

All documents cited in the present specification are incorporated herein in their entirety by reference.

As used hereinafter in this text, the singular forms "a", "the" comprise both the singular and the plural form unless the context is clearly otherwise.

The terms "comprise", "comprises", as used hereinafter, are synonymous with "inclusive", "include" or "contain", "contains" and are inclusive or open and do not exclude additional, unnamed members, elements or method steps. The terms "comprise", "comprises" are inclusive of the term "contain".

The recital of numerical values using a numeric range comprises all values and fractions in these ranges, as well as the stated end points.

The term "about", as used when referring to a measurable value such as a parameter, an amount, a duration, and so on, is intended to include variations of +/-10% or less, preferably +/-5% or less, more preferably +/-1% or less, and even more preferably +/-0.1% or less, of and from the specified value, insofar as the variations are applicable for functioning in the present invention. It is to be understood that the value to which the term "about" refers per se, was also made known.

Reference in this specification to "one embodiment" or "an embodiment" signifies that a certain function, structure or feature described in connection with the embodiment is applicable in at least one embodiment of the present invention. When the phrases "in one embodiment" or "an embodiment" are stated at different points in this specification they do not necessarily refer to the same embodiment, although this is not excluded.

In the present description of the invention, reference is made to the appended drawings, which form part thereof, and which illustrate specific embodiments of the invention. Numerals in parentheses or in bold linked to certain elements illustrate the respective elements as an example, without limiting the elements thereby. It is to be understood that other embodiments may be used and structural or logical modifications may be applied while remaining within the scope of the present invention. The following detailed description is not to be regarded as limiting, and the scope of the present invention is defined by the appended claims.

Unless defined otherwise, all terms made known in the invention, including technical and scientific terms, have the meaning as usually understood by a person skilled in the art. As further guidance, definitions are provided for further explanation of terms that are used in the description of the invention.

One aspect of the invention relates to a device for mounting a heating panel to a surface such as a wall or ceiling, the device comprising: a panel frame that is fastened or fastenable to the heating panel, the panel frame comprising at least two upright clamping springs fitted to both sides of the panel frame; and a suspension frame that is fastened or fastenable to a ceiling or wall, the suspension frame comprising at least one and preferably two suspension cables, which at a first end are anchored to the suspension frame and at a second end are provided with a means for suspending the panel frame, wherein the suspension frame is provided with at least two clamping spring openings with a diameter suitable for inserting a clamping spring; arranged in such a way that the panel frame can be click-coupled to the suspension frame by fixing the clamping springs in the suspension frame.

The device for mounting or fastening, or briefly mounting device, of a heating panel is thus a device with which a heating panel is or can be fastened to a surface, such as a ceiling or wall. The fastening surface is preferably a flat surface. The suspension frame can form a suspension point or frame on which the heating panel can be suspended or fastened. The panel frame can form an enclosure or housing for the heating panel, so that the heating panel can be enclosed completely in the panel frame. Alternatively the panel frame can be fastened to the heating panel, typically the back of the heating panel. The device can allow a heating panel to be mounted on a surface with little if any damage to the panel and/or the fastening surface. In addition, the device can hide the (mechanical) components of the underlying frames and/or fastening elements from view almost completely and thus provide total integration of the heating panel in or on the fastening surface. Moreover, the device can also allow the panel to be mounted and/or dismounted without making use of conventional fastening elements. The mounting and/or dismounting of the panel can then proceed in an easier, more user-friendly and/or quicker manner. In particular the device can provide mounting and/or dismounting of the panel by just one person (e.g. a technician or electrician).

A frame or framework as used herein refers to a rigid structure that is suitable for supporting and/or suspending the panel. The frame can be formed by a single curved frame profile. However, it is easier and more cost-effective to produce several frame profiles and then couple them together to form a frame. The profiles can be coupled together by means of a coupling element, such as a strip or bracket. The frame profiles are preferably arranged to give the frame an almost quadrangular shape, such as a square or rectangle. The term "almost" is then to be interpreted as that the structure in question is very close to the geometric shape in question, i.e., apart from any rounding, protrusions, coupling elements, grooves, slots, ribs, openings, connecting pieces, strengthening means, and the like. Reference is to be made to the figures for further explanation.

The frame as well as the frame profiles from which the frame is formed can have outer and inner walls. The outer frame walls refer to the walls that delimit the outside of said frame. The inner frame walls refer equivalently to the walls that delimit the inside of said frame. The outer and inner walls will typically not be in direct contact with the heating panel and/or the fastening surface, but may determine the distance between the heating panel and/or the fastening surface. The inner walls may also screen the internal (mechanical and/or electronic) components of the device. A person skilled in the art will understand that the dimensions of the inside walls can easily be adjusted to the necessary dimensions to house the internal components adequately. The adjacent upper or lower side walls are defined independently of the orientation and placement of the frame, e.g. vertically to a side wall or horizontally to a ceiling. The upper side walls of the suspension frame refer to the walls that are or will be in contact with the fastening surface. The upper side walls of the panel frame refer to the walls that are or will be in contact with the lower side walls of the suspension frame. The lower side walls of the suspension frame refer to the walls that are or will be in contact with the panel frame. The lower side walls of the panel frame refer to the walls that are or will be in contact with the heating panel.

A frame profile may, depending on the desired configuration, have a wide or narrow wall, be hollow or solid, have a ribbed or smooth surface, have an aesthetic finish, and so on. The advantages and disadvantages of the different configurations are presumed to be known by a person skilled in the art. The profiles are typically manufactured from a rigid material. This may for example be aluminium. Aluminium has many advantages as a profile material, namely it is robust, durable and light at the same time. Other profile materials are, however, also suitable and the advantages or disadvantages are presumed to be known by a person skilled in the art.

There may be countless variations on the dimensions of the frame and the frame profiles that form the frame. In some embodiments the frame has a first dimension (for example in height or width) from at least 0.1 cm to at most 20.0 cm, for example from 1.0 cm to 15.0 cm, for example from 5.0 cm to 15.0 cm, for example of about 10.0 cm. In some embodiments the frame has a second dimension (for example in length) from at least 0.1 m to at most 2.0 m, for example from 0.5 m to 1.5 m, for example from 0.8 m to 1.3 cm, for example from 0.9 cm to 1.1 m, for example of about 0.5 m.

A clamping spring or clampable spring is typically used for coupling components together and fixing them in the correct position. By providing the frame profile with at least two clamping springs, the frame profile can be coupled repeatedly to the suspension frame by said clamping springs. The term "clampable" is to be interpreted as being that at least one part of the body in question can be deformed, like a spring, and by returning to its original shape, the body in question can be clamped firmly. The clamping spring can simplify the mounting and dismounting of the heating panel considerably and make it more user-friendly. Moreover, the clamping spring can make mounting and dismounting by only one technician possible. In a preferred embodiment the frame profile comprises four clamping springs, wherein two clamping springs are provided on both sides of the frame profile.

A clamping spring may consist of several components: in particular a clampable component, which is deformable, and a rigid component, which is not or is barely deformable. The clampable component may be coupled to the suspension frame by clamping the clampable component in a component of the suspension frame, such as a frame profile. The rigid component may be fastened to the frame profile, for example by screw-fixing the rigid component in a component of the frame profile, such as a frame profile. Depending on the choice of material, a clamping spring may be more stiff or rigid, or more flexible and elastic. A person skilled in the art is presumed to understand how the choice of material can affect the resilience of a clamping spring.

Alternatively or additionally, the clamping spring may be or form a component of the panel frame, in particular of a frame profile of the panel frame. The clamping spring, clamping profile and frame profile therefore form a single integrated whole. The frame profile may for example be provided with a resilient component that performs the same function as the clamping spring. In a preferred embodiment the clamping spring and the frame profile form two separate components of the screening device, because this can ensure easier and cheaper production of the device. A person skilled in the art will understand that certain components of the device are compatible or combinable.

The clamping spring is preferably an upright clamping spring. The term "upright" is to be interpreted here as being that the body in question projects laterally from the object in question and preferably is almost at a right angle relative to the surface of the object in question. An exact right angle may simplify the mounting, but is not absolutely necessary. The angle between the surface of the panel frame and the upright portion is preferably at least 45° to at most 135°, preferably 70° to 110°, more preferably 80° to 100°, even more preferably 85° to 95°, for example 89°, for example 90°, for example 91°.

The clamping spring may have an upright body, wherein at least one part of the body is upright. Optionally the upright body may be curved, with an upright portion and a horizontal or flat portion. The upright portion or body preferably contains the resilient component. The upright portion may be connected or bonded with a horizontal portion, which preferably is fastened to the panel frame. The fastening of the clamping spring to the panel frame may be permanent or non-permanent. An example of permanent fastening is the use of a bonding means (e.g. glue) or a fastener (e.g. nail or screw). An example of non-permanent fastening is for example clamping of at least one part of the clamping spring in the panel frame, for example a space or indentation provided in the panel frame in which the clamping spring can be inserted.

The clamping spring is preferably a compressible clamping spring. The term "compressible" is to be interpreted here as that at least one part of the body in question can be deformed, like a spring, by exerting an inward pressing force, and that the deformed part will go back to its original shape on removing the pressing force applied. A fully compressible clamping spring may simplify mounting, but is not absolutely necessary. The resilience of the clamping spring may be adjusted depending on the application, for example the weight of the load, such as a larger heating panel.

The clamping spring may comprise a clampable member, i.e. a member projecting outwardly from the clamping spring body which is clampable in a component of the suspension frame. The clamping spring may comprise a compressible member, i.e. a member projecting outwardly from the clamping spring body and is compressible against the body of the clamping spring. The outwardly projecting clamping spring member is preferably set at an acute angle relative to the body of the upright clamping spring. The angle between the body and the outwardly projecting member of the clamping spring is preferably at least 1° to at most 89°, preferably 2° to 45°, more preferably 3° to 30°, even more preferably 4° to 25°, even more preferably 5° to 20°, even more preferably 6° to 18°, even more preferably 7° to 17°, even more preferably 8° to 16°, even more preferably 9° to 15°, for example 10°, for example 11°, for example 12°, for example 13°.

The clamping spring can be clamped in the suspension frame, preferably in a space formed by a frame profile of the suspension frame, such as between two vertical walls of said frame profile. The two vertical walls of frame profiles thereby form a space for receiving a clamping spring. The two vertical walls preferably form an inner and an outer wall of the suspension frame. Optionally, partition walls may be provided for screening or housing the clamping spring.

The suspension frame and in particular the frame profile may be provided with clamping spring openings for fitting the clamping springs. A clamping spring opening is preferably smaller than a clamping spring at rest, but larger than the clamping spring in a compressed state. The clamping spring may for example be fitted in the suspension frame by compressing said clamping spring and passing it through the corresponding clamping spring opening. Alternatively, the clamping spring may be pressed against the edges of the clamping spring opening, whereby said clamping spring is compressed, so that it can be moved through the clamping spring opening. Once through the clamping spring opening, the clamping spring can expand and lock the panel frame. The dimensions of the clamping spring are preferably adjusted to the space for receiving the clamping spring in the frame profile: in other words the clamping spring is preferably small enough to fit completely in the frame profile, but large enough to remain firmly clamped without moving to and fro.

The clamping spring opening is preferably provided on a bottom frame wall of the suspension frame, in particular a lower profile wall of a frame profile of the suspension frame. It then becomes possible to place and optionally press the panel frame against an underside of the suspension frame, so that the clamping spring is automatically compressed against the bottom frame wall of the suspension frame. At least as many clamping spring openings may be provided on the suspension frame as there are couplable clamping springs provided on the panel frame. Optionally, more clamping spring openings may be provided, so that the precise positioning of the panel frame relative to the suspension frame can still be adjusted during mounting. In a preferred embodiment the suspension frame comprises four clamping spring openings, wherein two clamping spring openings are provided on both sides of the suspension frame. The suspension frame and in particular the frame profile may be provided with decoupling openings for the decoupling of coupled clamping springs. The decoupling openings are arranged so that the clamping springs can be decoupled through the decoupling openings. A decoupling opening may for example allow the clamping spring to be compressed or pressed with an elongated object, such as a rod or screwdriver, so that the clamping spring is decoupled from the suspension frame. A decoupling opening is preferably smaller than a clamping spring, but larger than the size of the elongated object to be used.

The decoupling opening is preferably provided on an outer frame wall of the suspension frame, in particular an outer profile wall of a frame profile of the suspension frame. It thus becomes possible to decouple the panel frame from the suspension frame along a side of the device. In addition, access to the decoupling can be completely hidden from view by providing it on a back of the heating panel. At least as many decoupling openings may be provided on the suspension frame as there are coupled clamping springs present in the device. Optionally, more decoupling openings may be provided, so that the uncoupling of the panel frame after mounting can be carried out along different edges. In a preferred embodiment the suspension frame comprises four decoupling openings, wherein two decoupling openings are provided on both sides of the suspension frame.

A suspension cable can be used in order to suspend a component of the device (temporarily), in particular in order to suspend the panel frame (temporarily) on the suspension frame. In a preferred embodiment, the suspension frame comprises two suspension cables, provided on both sides of the suspension frame.

The suspension cable can simplify the mounting and dismounting of the heating panel considerably and/or make it more user-friendly. Moreover, the suspension cable may make mounting and dismounting by only one technician possible. In particular, one side of the panel frame may be suspended (temporarily) on the suspension frame, so that the technician is free to couple the opposite side of the panel frame on the suspension frame and optionally connect the power supply (e.g. power cables). Additionally, the suspension cable may form a failure protection when one side of the panel frame becomes detached, for example through failure or incorrect clamping of a clamping spring. A failure of the heating panel may cause irreparable damage to the heating panel itself as well as to the environment, such as nearby persons or objects. The presence of suspension cables may thus improve the safety and/or durability of the device, both during and after installation.

The suspension cable typically has two ends: in particular a first end for fastening to the suspension frame and a second end for fastening to the panel frame. During suspension, the panel frame preferably remains stably suspended, for example by providing a rigid cable. Depending on the choice of material, a suspension cable may be more stiff or rigid, or more flexible and elastic. A person skilled in the art is presumed to understand how the choice of material can affect the rigidity of a suspension cable.

The suspension cable is preferably anchored at the first end to the suspension frame, for example by an anchoring element such as a nut and bolt. The first end may for example have a loop, which is anchored by the anchoring element to a frame profile of the suspension frame and remains hinged. Alternatively, the first end may have a fastening point, such as a thickening, which can be inserted in a fastening opening in the frame profile. A person skilled in the art will understand that there are various anchorages and the invention is not limited to a particular configuration thereof.

The suspension cable is preferably provided at the second end with a means for suspending the panel frame, i.e. a suspending means. The suspending means preferably allows repeatable fastening of the suspension cable to the panel frame. The panel frame preferably comprises a suspension point, to which the suspension cable of the suspension frame can be fastened repeatedly. The second end may for example be provided with a loop, which may for example be hooked on a hook fastened to the panel frame. The second end may for example be provided with a hook, which for example can be hooked on a hooking point fastened to the panel frame. The suspension point is preferably provided at or on an inner frame wall of the panel frame, in particular an inner frame wall of a frame profile of the panel frame. In a preferred embodiment, the second end may comprise a fastening clip, hook, eye and/or clasp, which is fastenable to the panel frame. In a preferred embodiment, the second end comprises a, preferably closable, carabine hook.

The panel frame may comprise a suspension plate, on which the suspension cable can preferably be fastened repeatedly. The suspension plate may comprise a laterally projecting hook-shaped or arched component, on which the suspension cable can be hooked repeatedly. The suspension plate or at least the fastening point is preferably provided at or on an inner frame wall of the panel frame, in particular an inner profile wall of the panel frame.

A supporting plate may be used for supporting the panel frame during coupling to the suspension frame. An example of a supporting plate is a bearing plate. Depending on the load, a choice may be made between a continuous or discontinuous support. The supporting plate is preferably at least provided near or against a clamping spring or a clamping spring opening, so that it can be pressed against this point for clamping the clamping spring. The supporting plate may thus protect the suspension frame from damage through pushing or rubbing.

A hinge plate may be used for hinging the panel frame relative to the suspension frame. The hinge plate is preferably provided on a side of the suspension frame. This side may then serve as hinge point for hinging the panel frame towards the suspension frame during mounting, or for hinging the panel frame away from the suspension frame during dismounting. The hinge plate may comprise an insert plate, against which the panel frame can engage to limit and control the movement in a hinging direction. The bearing plate is preferably provided on a lower profile wall of the suspension frame.

A further aspect of the invention relates to a heating system, the heating system comprising: a suspension system according to one or more embodiments as described herein, a heating panel and optionally a power supply for powering the heating panel and/or a control element for switching on the heating panel. The heating panel is connected electrically to the power supply. The control element may be an electrical control element.

A typical heating panel consists of a panel in which a heating layer is incorporated that contains an electrically conductive material such as carbon and/or conductive additives in a binder. The layer can be heated by applying a voltage to said layer. The heating may also be combined with emission of infrared radiation; in this case the heating plate forms an infrared radiation plate. The side towards which the infrared rays will be emitted may be provided with a conducting material, which can direct the dispersion of the infrared rays. A person skilled in the art will understand that the present device is not limited to a particular type of heating panel, but may be freely used for mounting and/or dismounting for various types of mountable heating panels. The device may in principle be freely adapted to the required dimensions and load of the desired type of heating panel.

The heating panel is preferably a glass heating panel. The glass heating panel may comprise a glass plate on a front and optionally on an opposite back. The back may comprise a coat of paint, which is preferably baked into the glass plate. The coat of paint may comprise a layer with metal strips, preferably a layer of copper strips. The coat of paint may comprise an electric heating layer. The electric heating layer may comprise a binder with one or more conductive additives distributed therein, such as graphite and/or carbon black.

The glass plate preferably consists of conductive glass, such as used in the manufacture of solar panels. The glass may have a composition such that the amount of iron (expressed in the form of Fe₂O₃) is not greater than 0.03 wt.% relative to the total weight of the glass and an amount of copper of not more than 0.15 wt.% relative to the total weight of the glass. The glass preferably has a composition containing: 60-78% SiO₂, 0-10% Al₂O₃, 0-5% B₂O₃, 0-15% CaO, 0-10% MgO, 5-20% Na₂O, 0-10% K₂O and 0-5% BaO, wherein the percentages by weight are expressed relative to the total weight of the glass. In a particular embodiment the glass has a composition containing 60-78% SiO₂, 0-10% Al₂O₃, 0-5% B₂O₃, 0-15% CaO, 0-10% MgO, 5-20% Na₂O, 0-10% K₂O and 0-5% BaO, 0.002-0.03% iron (expressed as Fe₂O₃) and copper in an amount from 0.001 to 0.15%, wherein the percentages by weight are expressed relative to the total weight of the glass. The energy transmission of the glass measured for a thickness of the glass of 3.85 mm according to ISO9050 and a wavelength range between 300 and 2500 nm is preferably at least 90%, even more preferably at least 91%. An example of glass plate suitable for use in the present heating panel is for example described in WO 2013/150053. This publication also describes a method for making the glass plate.

In a preferred embodiment the glass plate may be provided with a coat of paint on the back, preferably a coat of white paint and this coat of paint can be baked into the glass by a technique familiar to a person skilled in the art. This coat of paint will in general comprise a binder with colour pigments distributed therein, preferably a white pigment. The binder for use in the coat of paint is preferably a non-conductive binder such as a non-conductive polymer or an inorganic binder. Binders for use in the coat of paint are for example those that may also be used in the heating layer, and which are described hereunder.

The heating layer may comprise a binder with one or more conductive additives distributed therein such as graphite and/or carbon black. In a particular embodiment the heating layer comprises both graphite and carbon black and the electric heating layer is free from or substantially free from electrically conductive carbon fibres and/or carbon nanotubes. In another embodiment the electric heating layer contains a non-conductive binder, conductive carbon fibres and/or nanotubes optionally in combination with graphite and/or carbon black. Electric heating layers according to the last-mentioned embodiment are generally more difficult to produce reproducibly so that an embodiment in which only or especially carbon black and/or graphite are used as conductive additives is preferred. Non-conductive binders that may be used are not especially limited and comprise thermoplastic polymers, elastomers, reactive resins. Examples of polymers that may be used as binder are: polyolefins, polyamides, poly(meth)acrylates, fluoropolymers, polyesters, polyimides, polyacetals and vinyl polymers. Examples of elastomers that may be used as binder are: natural resins, isoprene rubber, butadiene rubber, silicone elastomers and polyurethanes. Usable inorganic binders may comprise a mineral, which when mixed with water can be processed into a paste, which can then harden. Usable inorganic binders are preferably non-conductive and may comprise among other things: cement, lime, gypsum, water glass, etc. Examples of suitable electric heating layers are described in WO 2018/078087. The thickness of the electric heating layer is usually between 40 and 200 µm, preferably between 50 and 100 µm.

The glass heating panel may comprise metal strips, which are preferably applied on the coat of paint, and on top of which the electric heating layer is then applied. The metal strips preferably consist of copper. In a typical embodiment, two metal strips are applied with a certain distance between them. This distance may be selected over a wide range. The distance between the strips may be up to 2 m, or up to 1 m, or between 50 and 80 cm. In a preferred embodiment the distance between the strips is between 55 cm and 75 cm. The strips may be applied in the longitudinal or transverse direction of the glass plate, on opposite edges of the glass plate. However, other configurations are not excluded. By applying a voltage between two metal strips, the electric heating layer may heat up and generally also radiate infrared radiation.

The glass heating panel may optionally comprise further layers, such as a black (non-conductive) coat of paint over the heating layer. The top layer may be an aesthetic layer, for fully integrating the heating panel in the surroundings.

In a further aspect, the invention relates to a method for mounting a heating panel with a device according to one or more embodiments as described herein, the method comprising the steps:
(a) optionally, fastening a heating panel to a panel frame; preferably fastening with a fastener, such as a nail or a screw;
(b) optionally, fastening a suspension frame to a surface, such as a wall or ceiling; preferably fastening with a fastener, such as a nail or a screw;
(c) fastening a suspension cable of the suspension frame to a first side of the panel frame for suspending the panel frame; preferably fastening to a fastening point provided near or on a first clamping spring of the panel frame;
(d) coupling a second, opposite side of the panel frame to the suspension frame; preferably by clamping a second, opposite clamping spring of the panel frame in the suspension frame;
(e) coupling the first side of the panel frame to the suspension frame; preferably by clamping the first clamping spring of the panel frame in the suspension frame.

The fastening of the suspension cable in step (c) preferably comprises an attachment, suspension, hooking-in or attaching a fastening element, such as a fastening clip, hook, eye or clasp.

Coupling of the panel frame to the suspension frame in step (d) and/or step (e) preferably comprises compressing or pressing-in a clamping spring for clamping in the suspension frame. The clamping spring may be compressed beforehand and passed through a clamping spring opening provided in the suspension frame, after which it can expand in the suspension frame and fix the panel frame. Alternatively the clamping spring may be expanded and pressed against an edge of a clamping spring opening provided in the suspension frame, so that the clamping spring will be pressed in automatically and once it is past the edge of the clamping spring opening it will expand in the suspension frame and fix the panel frame.

In a further aspect, the invention relates to a method for dismounting a heating panel of a device according to one or more embodiments as described herein, wherein the heating panel is fastened to a panel frame and the panel frame is coupled to a suspension frame, the method comprising the steps:
(A) decoupling a first side of the panel frame from the suspension frame; preferably by unclamping a first clamping spring of the panel frame;
(B) extending a suspension cable provided between the panel frame and suspension frame for suspending the panel frame; preferably by allowing the first side of the panel frame to drop down;
(C) decoupling a second, opposite side of the panel frame from the suspension frame; preferably by unclamping a second, opposite clamping spring of the panel frame;
(D) optionally, allowing the second side of the panel frame to drop down;
(E) releasing the suspension cable from the suspension frame of the panel frame;
(F) optionally, releasing the heating panel from the panel frame; preferably releasing with a fastener with which the heating panel is fastened, such as a nail or a screw.

The decoupling of the panel frame from the suspension frame in step (A) and/or step (C) preferably comprises compressing or pressing-in a clamping spring that is clamped by the suspension frame. The clamping spring may be compressed through a decoupling opening provided in the suspension frame, so that it can be passed through the clamping spring opening.

The releasing of the suspension cable in step (D) preferably comprises releasing or unhooking a fastening element fastened to a fastening point of the panel frame.

In a further aspect, the invention relates to a use of a device for mounting and/or dismounting a heating panel on or from a surface, such as a wall or ceiling.

In a further aspect, the invention relates to a use of a heating system for heating a space and/or object.

### EXAMPLES

For the examples, reference is made to the figures. The embodiments illustrated in the figures relate to preferred embodiments of the present invention and should not in any way be interpreted as a limitation.

### Example 1: Infrared heating system

The device (10) comprises a panel frame (100) that is coupled to a suspension frame (200). The heating panel (50) is fastened to the panel frame (100). The upper side of the device (10) is the side that can be fastened to a surface, such as a wall or ceiling. The device (10) and heating panel (50) together form an infrared heating system. The heating panel (50) is connected electrically to a power supply, comprising a plug, a wire connector and a grommet for the power cable. The heating system is explained further referring to the following figures.

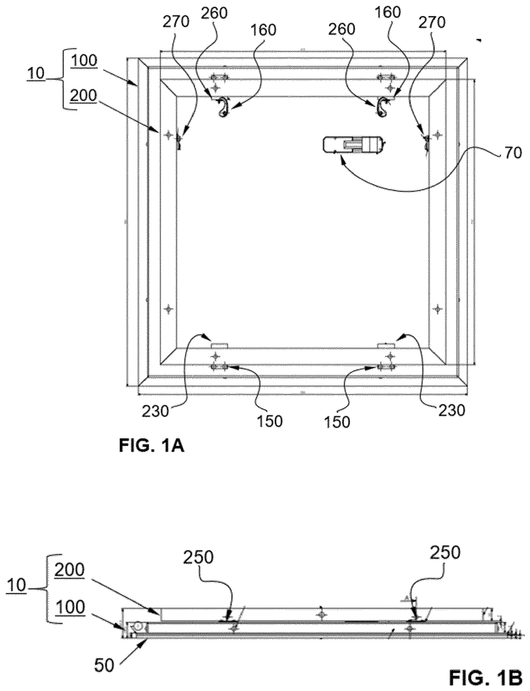

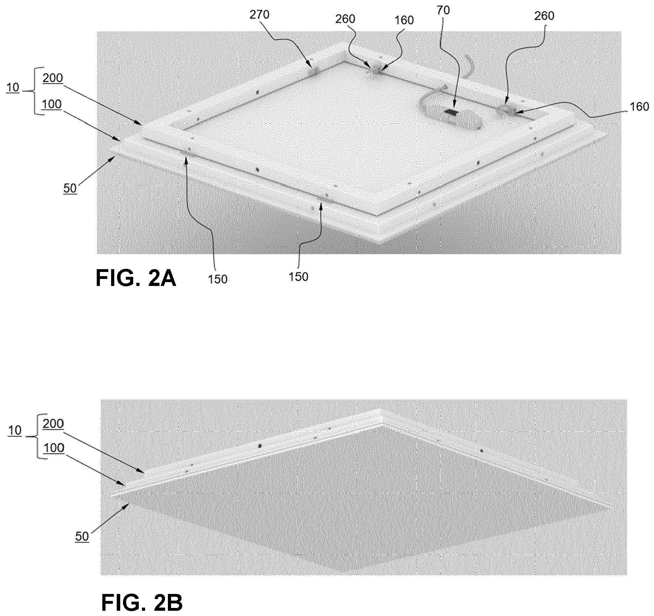

**Fig.1A** is a schematic top view of a device (10) according to a first preferred embodiment for mounting an infrared heating panel (50). **Fig. 1B** shows the same device (10) in side view, **Fig. 2A** in a perspective top view and **Fig. 2B** in a perspective bottom view. In the first preferred embodiment the heating panel (50) is of square shape.

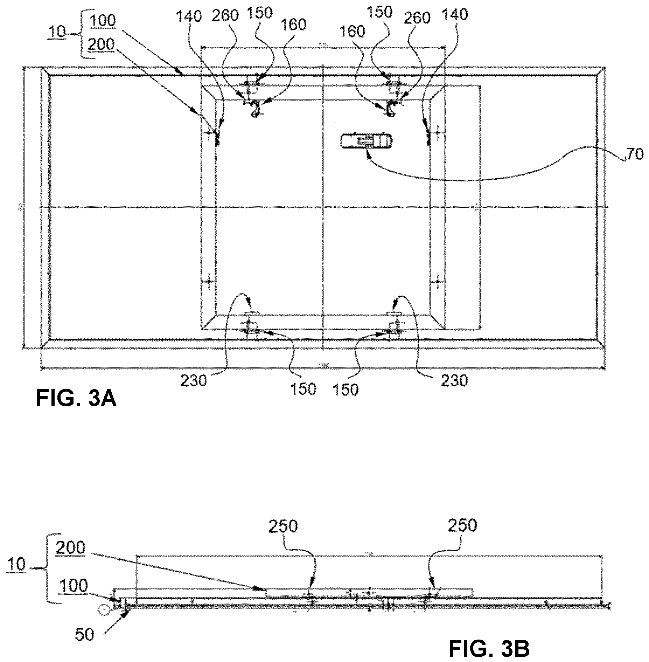

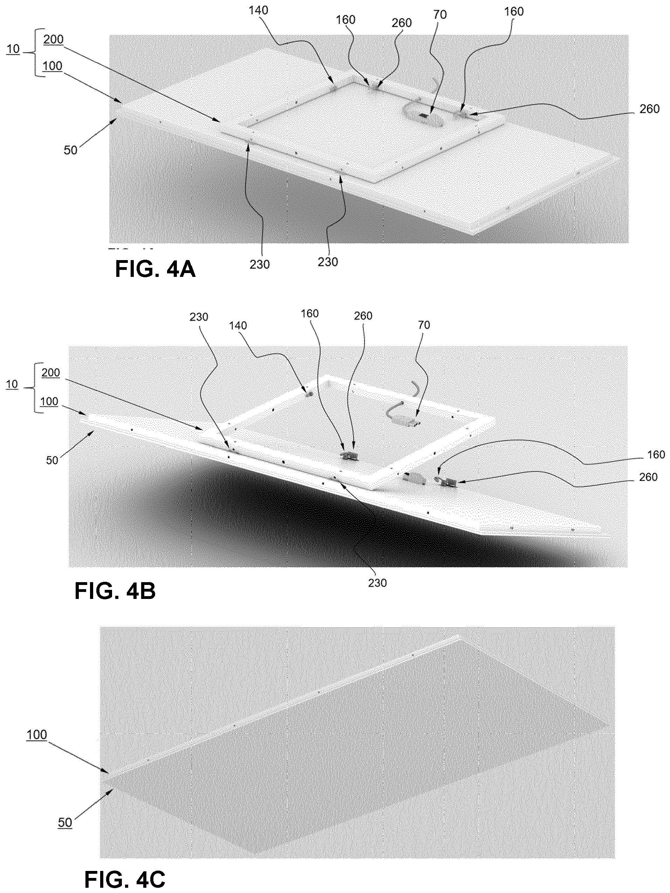

**Fig. 3A** is a schematic top view of a device (10) according to a second preferred embodiment for mounting an infrared heating panel (50). **Fig. 3B** shows the same device (10) in side view. **Fig. 4A** and **Fig. 4B** are a perspective top view of the same device (10), wherein in **Fig. 4A** the panel frame (100) is fully coupled to the suspension frame (200) and in **Fig. 4B** the panel frame (100) is partly disconnected from the suspension frame (200). **Fig. 4C** is a perspective bottom view of the same device (10). In the second preferred embodiment the heating panel (50) is of rectangular shape.

The panel frame (100) comprises four upright clamping springs (150), of which two clamping springs (150) are applied to a first side of the panel frame (100) and two clamping springs (150) are applied to a second, opposite side of the panel frame (100); the four clamping springs are fitted to both sides of the panel frame (100).

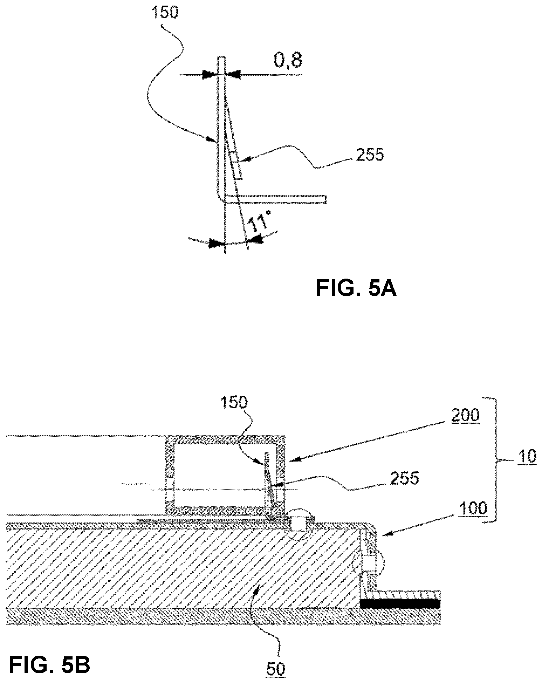

A detail of a clamping spring in side view is shown in **Fig. 5A****.** The clamping spring (150) has a resilient member that projects outwardly from the body of the clamping spring (150); the clamping spring (150) has a resilient, outwardly projecting member (155). The projecting member is at an angle of about 11° relative to the upright body of the clamping spring (150). The outwardly projecting member (155) may be compressed against the body of the clamping spring (150). **Fig. 5B** shows how the clamping spring (150) can be passed in through a clamping spring opening so that it can be clamped in the suspension frame (200), in particular in a frame profile of the suspension frame (200). The clamping spring opening is provided on a lower profile wall of the suspension frame (200). Each clamping spring illustrated in **Fig. 1A** is introduced similarly through a clamping spring opening.

**Fig. 5B** shows further that the suspension frame (200) is provided with a decoupling opening via which the clamping spring (150) can be decoupled, for example by a rod or screwdriver. The resilient outwardly projecting member (155) can be compressed through the decoupling opening so that the clamping spring (150) passes back through the clamping spring opening.

The suspension frame (200) comprises two suspension cables (not shown in the figure), which are anchored at a first end to the suspension frame (200) by means of a suspension cable anchorage (270). The suspension cable anchorage comprises a bolt that has been passed through an eye or loop at the first end and is fixed by a nut to a frame profile of the suspension frame (200). The suspension cables further comprise, at a second end, a suspending means (260) that is fastened to a suspension point (260) provided on the panel frame (100). A suspending means (260) comprises a fastening clip (260) which can be hooked on a suspension plate (260).

### Example 2: Method for mounting and dismounting

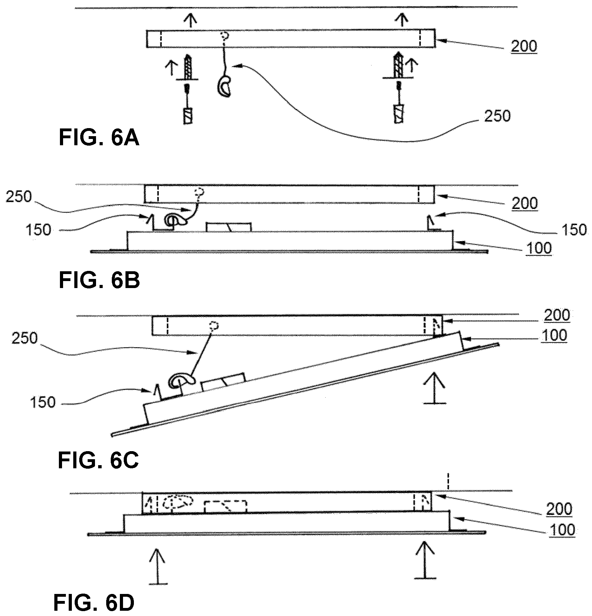

The method for mounting a heating panel (50) on the present device (10) is explained with reference to **Figs. 6 A-D. Fig. 6A** shows how a suspension frame (200) is fastened to a ceiling with at least two screws. In **Fig. 6B****,** a suspension cable (250) is fastened to a first side of the panel frame (100) so that the panel frame (100) can be suspended on the suspension frame (200). A carabine clip provided at one end of the suspension cable (250) is then fastened to a laterally projecting suspension plate (160) provided on an inner frame wall of the panel frame (100). **Fig. 6C** shows the coupling of a second, opposite side of the panel frame (100) to the suspension frame (200) by clamping a second, opposite clamping spring (150b) in the suspension frame (200). The clamping spring is pressed against an edge of a clamping spring opening provided in the suspension frame (200), and once in the suspension frame (200) it will expand back and fix panel frame (100). Finally, **Fig. 6D** shows the coupling of the first side of the panel frame (100) on the suspension frame (200) by clamping the first clamping spring (150a) in the suspension frame (200). The panel frame (100) is thus coupled to the suspension frame (200) with all components contained inside the suspension frame (200).

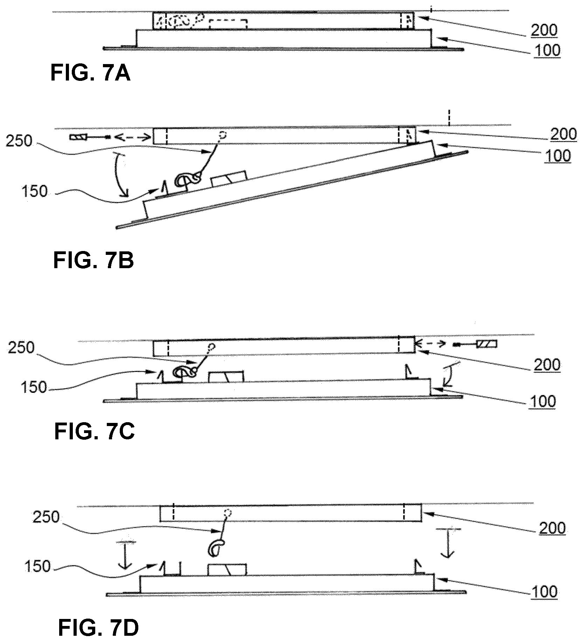

The method for dismounting a heating panel (50) of the present device (10) is explained with reference to **Figs. 7 A-D. Fig. 7A** shows the decoupling of a first side of the panel frame (100) of the suspension frame (200) by unclamping a first clamping spring (150a) from the suspension frame (200). Unclamping is effected by pressing-in the clamping spring (150) that is clamped by suspension frame (200) through a decoupling opening provided in the suspension frame (200). In **Fig. 7B****,** a first side of the panel frame (100) is lowered so that the suspension cable (250a) provided between the panel frame (100) and the suspension frame (200) can serve for suspending the panel frame (100). **Fig. 7C** shows the decoupling of a second, opposite side of the panel frame (100) of the suspension frame (200) by unclamping a second, opposite clamping spring (150b) from the suspension frame (200). Unclamping is also carried out by pressing-in the clamping spring (150) that is clamped by the suspension frame (200) through a decoupling opening provided on a side of the suspension frame (200). Finally, in **Fig. 7D****,** the second side of the panel frame (100) is lowered and the suspension cable (250) is undone from the first side of the panel frame (100). The panel frame (100) is thus disconnected from the suspension frame (200) and the heating panel fastened to the panel frame (100) can then be detached.

## Claims

1. Device (10) for mounting a heating panel (50) on a surface such as a wall or ceiling, the device (10) comprising:
- a panel frame (100) that is fastenable to the heating panel (50), comprising at least two upright clamping springs (150) fitted to both sides of the panel frame (100);
a suspension frame (200) that is fastenable to the surface;
said device (10) being **characterised in that** said suspension frame (200) comprises at least one and preferably two suspension cables (250), which at a first end are anchored to the suspension frame (200) and at a second end are provided with a means for suspending the panel frame (100), and **in that** said suspension frame (200) is provided with at least two clamping spring openings on both sides of the suspension frame (200) with a diameter suitable for inserting a clamping spring (150); and,
**in that** said device (10) is arranged in such a way that the panel frame (100) can be click-coupled to the suspension frame (200) by fixing the at least two clamping springs (150) through the clamping spring openings.

2. Device (10) according to Claim 1, wherein the clamping spring (150) has an upright body provided with a compressible member (155) projecting outwardly from the body of the clamping spring (150), which is compressible against or in the direction of the upright body of the clamping spring (150).

3. Device (10) according to Claim 2, wherein the compressible member (155) is set at an acute angle relative to the upright body of the clamping spring (150); preferably an angle from at least 1° to at most 45°, more preferably 3° to 30°, even more preferably 4° to 25°, even more preferably 5° to 20°, even more preferably 9° to 15°, for example 11°.

4. Device (10) according to one of Claims 1 to 3, wherein the suspension frame (200) is provided with at least two decoupling openings on both sides of the suspension frame (200), arranged in such a way that the clamping springs (150) can be decoupled through the decoupling openings; preferably provided on an outer frame wall of the suspension frame (200).

5. Device (10) according to one of Claims 1 to 4, wherein the panel frame (100) comprises a laterally projecting suspension plate (160) to which the suspension cable (250) can be fastened, preferably repeatedly; preferably wherein the suspension plate (160) is provided on an inner frame wall of the panel frame (100).

6. Device (10) according to one of Claims 1 to 5, wherein the second end of the suspension cable (250) is provided with a fastening clip, hook, eye or clasp.

7. Device (10) according to one of Claims 1 to 6, wherein the suspension frame (200) comprises a supporting or bearing plate (230), against which the panel frame (100) is placed; preferably wherein the supporting or bearing plate (230) is provided on a bottom frame wall of the suspension frame (200).

8. Heating system comprising:
- the device (10) according to one of Claims 1 to 7,
- a heating panel (50); and,
- optionally, a power supply (70) for powering the heating panel (50).

9. Heating system according to Claim 8, wherein the heating panel (50) comprises a glass plate with a front and an opposite back, wherein the back contains a coat of paint, a layer with metal strips, and an electric heating layer, wherein the electric heating layer contains a binder with one or more conductive additives distributed therein.

10. Heating system according to Claim 9, wherein the glass of the glass plate has a composition wherein the amount of iron (expressed in the form of Fe₂O₃) is not greater than 0.03 wt.% relative to the total weight of the glass and an amount of copper of not more than 0.15%, wherein the percentage by weight (wt.%) is expressed relative to the total weight of the glass, and/or wherein the energy transmission measured for a thickness of the glass of 3.85 mm according to ISO9050 and a wavelength range between 300 and 2500nm, is at least 90%.

11. Heating system according to one of Claims 9 or 10, wherein the binder of the heating layer is a non-conductive polymer and/or the metal strips are copper strips, and/or the conductive additives are selected from the group consisting of graphite, carbon black and a combination of the two, and/or the glass has a composition containing 60-78% SiO₂, 0-10% Al₂O₃, 0-5% B₂O₃, 0-15% CaO, 0-10% MgO, 5-20% Na₂O, 0-10% K₂O and 0-5% BaO, wherein the percentage by weight (wt.%) is expressed relative to the total weight of the glass.

12. Method for mounting a heating panel (50) with a device (10) according to one of Claims 1 to 7, the method comprising the steps:
(a) optionally, fastening a heating panel (50) to a panel frame (100); preferably fastening with a fastener, such as a nail or a screw;
(b) optionally, fastening a suspension frame (200) to a surface, such as a wall or ceiling; preferably fastening with a fastener, such as a nail or a screw;
(c) fastening a suspension cable (250) of the suspension frame (200) to a first side of the panel frame (100) for suspending the panel frame (100); preferably fastening to a laterally projecting suspension plate (160) provided near or on a first clamping spring (150a);
(d) coupling a second, opposite side of the panel frame (100) to the suspension frame (200); preferably by clamping a second, opposite clamping spring (150b) in the suspension frame (200);
(e) coupling the first side of the panel frame (100) to the suspension frame (200); preferably by clamping the first clamping spring (150a) in the suspension frame (200).

13. Method for dismounting a heating panel (50) from a device (10) according to one of Claims 1 to 7, the method comprising the steps:
(A) decoupling a first side of the panel frame (100) from the suspension frame (200); preferably by unclamping a first clamping spring (150a) from the suspension frame (200);
(B) extending a suspension cable (250a) provided between the panel frame (100) and the suspension frame (200) for suspending the panel frame (100); preferably by allowing the first side of the panel frame to drop down (100);
(C) decoupling a second, opposite side of the panel frame (100) from the suspension frame (200); preferably by unclamping a second, opposite clamping spring (150b) from the suspension frame (200);
(D) optionally, allowing the second side of the panel frame to drop down (100);
(E) detaching the suspension cable (250) from the suspension frame (200) of the panel frame (100);
(F) optionally, releasing the heating panel (50) from the panel frame (100).

14. Use of a device (10) according to one of Claims 1 to 7 for mounting and/or dismounting a heating panel (50) on or from a surface, such as a wall or ceiling.

15. Use of a heating system according to one of Claims 8 to 11 for heating a space and/or object.

## Patentansprüche

1. Vorrichtung (10) zum Montieren eines Heizpaneels (50) an einer Oberfläche, wie etwa einer Wand oder einer Decke, wobei die Vorrichtung (10) Folgendes umfasst:
- einen Paneelrahmen (100), der am Heizpaneel (50) befestigbar ist, die mindestens zwei aufrechte Klemmfedern (150) umfasst, die an beiden Seiten des Paneelrahmens (100) befestigt sind;
einen Aufhängungsrahmen (200), der an der Oberfläche befestigbar ist; wobei die Vorrichtung (10) **dadurch gekennzeichnet ist, dass** der Aufhängungsrahmen (200) zumindest ein und vorzugsweise zwei Aufhängungskabel (250) umfasst, die an einem ersten Ende am Aufhängungsrahmen (200) verankert sind und an einem zweiten Ende mit einem Mittel zum Aufhängen des Paneelrahmens (100) versehen sind, und dadurch, dass der Aufhängungsrahmen (200) mit mindestens zwei Klemmfederöffnungen auf beiden Seiten des Aufhängungsrahmens (200) versehen ist, mit einem Durchmesser, der geeignet ist zum Einführen einer Klemmfeder (150); und dadurch, dass die Vorrichtung (10) in einer Weise angeordnet ist, dass der Paneelrahmen (100) durch Einrasten mit dem Aufhängungsrahmen (200) gekoppelt werden kann, indem die mindestens zwei Klemmfedern (150) durch die Klemmfederöffnungen fixiert werden.

2. Vorrichtung (10) nach Anspruch 1, wobei die Klemmfeder (150) einen aufrechten Körper aufweist, versehen ist mit einem zusammendrückbaren Element (155), das vom Körper der Klemmfeder (150) nach außen herausragt, das gegen oder in Richtung des aufrechten Körpers der Klemmfeder (150) zusammendrückbar ist.

3. Vorrichtung (10) nach Anspruch 2, wobei das zusammendrückbare Element (155) bei einem spitzen Winkel relativ zum aufrechten Körper der Klemmfeder (150) gesetzt ist; vorzugsweise einem Winkel von mindestens 1° bis höchsten 45°, eher zu bevorzugen von 3° bis 30°, noch eher zu bevorzugen von 4° bis 25°, noch eher zu bevorzugen von 5° bis 20°, noch eher zu bevorzugen von 9° bis 15°, beispielsweise 11°.

4. Vorrichtung (10) nach einem der Ansprüche 1 bis 3, wobei der Aufhängungsrahmen (200) mit mindestens zwei Entkopplungsöffnungen auf beiden Seiten des Aufhängungsrahmens (200) versehen ist, die in einer Weise angeordnet sind, dass die Klemmfedern (150) über die Entkopplungsöffnungen entkoppelt werden können; vorzugsweise bereitgestellt an einer äußeren Rahmenwand des Aufhängungsrahmens (200).

5. Vorrichtung (10) nach einem der Ansprüche 1 bis 4, wobei der Paneelrahmen (100) eine lateral herausragende Aufhängungsplatte (160) umfasst, an der das Aufhängungskabel (250) befestigt werden kann, vorzugsweise wiederholt; wobei vorzugsweise die Aufhängungsplatte (160) an einer inneren Rahmenwand des Paneelrahmens (100) bereitgestellt ist.

6. Vorrichtung (10) nach einem der Ansprüche 1 bis 5, wobei das zweite Ende des Aufhängungskabels (250) mit einer Klammer, einem Haken, einer Öse oder einer Spange zur Befestigung versehen ist.

7. Vorrichtung (10) nach einem der Ansprüche 1 bis 6, wobei der Aufhängungsrahmen (200) eine Stütz- oder Lagerplatte (230) umfasst, gegen die der Paneelrahmen (100) platziert ist; wobei vorzugsweise die Stütz- oder Lagerplatte (230) an einer unteren Rahmenwand des Aufhängungsrahmens (200) bereitgestellt ist.

8. Heizsystem, das Folgendes umfasst:
- die Vorrichtung (10) nach einem der Ansprüche 1 bis 7,
- ein Heizpaneel (50); und
- optional, eine Leistungsversorgung (70) zum Versorgen des Heizpaneels (50).

9. Heizsystem nach Anspruch 8, wobei das Heizpaneel (50) eine Glasplatte mit einer Vorderseite und einer gegenüberliegenden Rückseite umfasst, wobei die Rückseite eine Lackbeschichtung, eine Schicht mit Metallstreifen und eine elektrische Heizschicht umfasst, wobei die elektrische Heizschicht ein Bindemittel mit einem oder mehreren darin verteilten leitfähigen Additiven enthält.

10. Heizsystem nach Anspruch 9, wobei das Glas der Glasplatte eine Zusammensetzung aufweist, wobei die Menge von Eisen (ausgedrückt in der Form von Fe₂O₃) nicht größer als 0,03 Gew.-% relativ zum Gesamtgewicht des Glases ist und eine Menge von Kupfer nicht mehr als 0,15 % ist, wobei die Gewichtsprozente (Gew.-%) relativ zum Gesamtgewicht des Glases ausgedrückt werden, und/oder wobei die Energieübertragung, die für eine Dicke des Glases von 3,85 mm gemäß ISO9050 und einen Wellenlängenbereich zwischen 300 und 2500 nm gemessen wird, mindestens 90 % ist.

11. Heizsystem nach einem der Ansprüche 9 oder 10, wobei das Bindemittel der Heizschicht ein nicht-leitfähiges Polymer ist und/oder die Metallstreifen Kupferstreifen sind und/oder die leitfähigen Additive aus der Gruppe ausgewählt werden, die besteht aus Graphit, Ruß und einer Kombination aus den zweien und/oder das Glas eine Zusammensetzung aufweist, die 60-78 % SiO₂, 0-10 % Al₂O₃, 0-5 % B₂O₃, 0-15 % CaO, 0-10 % MgO, 5-20 % Na₂O, 0-10 % K₂O und 0-5 % BaO enthält, wobei die Gewichtsprozente (Gew.-%) relativ zum Gesamtgewicht des Glases ausgedrückt werden.

12. Verfahren zum Montieren eines Heizpaneels (50) mit einer Vorrichtung (10) nach einem der Ansprüche 1 bis 7, wobei das Verfahren die folgenden Schritte umfasst:
(a) optional, Befestigen eines Heizpaneels (50) an einem Paneelrahmen (100); vorzugsweise Befestigen mit einem Befestigungsmittel, wie etwa einem Nagel oder einer Schraube;
(b) optional, Befestigen eines Aufhängungsrahmens (200) an einer Oberfläche, wie etwa einer Wand oder einer Decke; vorzugsweise Befestigen mit einem Befestigungsmittel, wie etwa einem Nagel oder einer Schraube;
(c) Befestigen eines Aufhängungskabels (250) des Aufhängungsrahmens (200) an einer ersten Seite des Paneelrahmens (100) zum Aufhängen des Paneelrahmens (100); vorzugsweise Befestigen an einer lateral herausragenden Aufhängungsplatte (160), bereitgestellt nahe oder an einer ersten Klemmfeder (150a);
(d) Koppeln einer zweiten, gegenüberliegenden Seite des Paneelrahmens (100) mit dem Aufhängungsrahmen (200); vorzugsweise durch Anklemmen einer zweiten, gegenüberliegenden Klemmfeder (150b) im Aufhängungsrahmen (200);
(e) Koppeln der ersten Seite des Paneelrahmens (100) mit dem Aufhängungsrahmen (200); vorzugsweise durch Anklemmen der ersten Klemmfeder (150a) im Aufhängungsrahmen (200).

13. Verfahren zum Demontieren eines Heizpaneels (50) von einer Vorrichtung (10) nach einem der Ansprüche 1 bis 7, wobei das Verfahren die folgenden Schritte umfasst:
(A) Entkoppeln einer ersten Seite des Paneelrahmens (100) vom Aufhängungsrahmen (200); vorzugsweise durch Ausklemmen einer ersten Klemmfeder (150a) aus dem Aufhängungsrahmen (200);
(B) Verlängern eines Aufhängungskabels (250a), bereitgestellt zwischen dem Paneelrahmen (100) und dem Aufhängungsrahmen (200) zum Aufhängen des Paneelrahmens (100); vorzugsweise dadurch, dass der ersten Seite des Paneelrahmens erlaubt wird, sich abzusenken (100);
(C) Entkoppeln einer zweiten, gegenüberliegenden Seite des Paneelrahmens (100) vom Aufhängungsrahmen (200); vorzugsweise durch Ausklemmen einer zweiten, gegenüberliegenden Klemmfeder (150b) aus dem Aufhängungsrahmen (200);
(D) optional, der zweiten Seite des Paneelrahmens Erlauben, sich abzusenken (100);
(E) Abnehmen des Aufhängungskabels (250) vom Aufhängungsrahmen (200) des Paneelrahmens (100);
(F) optional, Lösen des Heizpaneels (50) vom Paneelrahmen (100).

14. Verwenden einer Vorrichtung (10) nach einem der Ansprüche 1 bis 7 zum Montieren und/oder Demontieren eines Heizpaneels (50) an bzw. von einer Oberfläche, wie etwa einer Wand oder einer Decke.

15. Verwenden eines Heizsystems nach einem der Ansprüche 8 bis 11 zum Heizen eines Raumes und/oder Objekts.

## Revendications

1. Dispositif (10) pour le montage d'un panneau chauffant (50) sur une surface telle qu'un mur ou un plafond, le dispositif (10) comprenant :
- un cadre de panneau (100) qui est apte à être attaché au panneau chauffant (50), comprenant au moins deux ressorts de serrage verticaux (150) adaptés des deux côtés du cadre de panneau (100) ;
un cadre de suspension (200) qui est apte à être attaché à la surface ; ledit dispositif (10) étant **caractérisé en ce que** ledit cadre de suspension (200) comprend au moins un et, de préférence, deux câbles de suspension (250), qui sont, à une première extrémité, ancrés au cadre de suspension (200) et, à une seconde extrémité, pourvus d'un moyen pour suspendre le cadre de panneau (100), et **en ce que** ledit cadre de suspension (200) est pourvu d'au moins deux ouvertures pour ressorts de serrage des deux côtés du cadre de suspension (200) avec un diamètre approprié pour l'insertion d'un ressort de serrage (150) ; et **en ce que** ledit dispositif (10) est conçu de telle sorte que le cadre de panneau (100) peut être accouplé par emboîtement-pression au cadre de suspension (200) en fixant les au moins deux ressorts de serrage (150) à travers les ouvertures pour ressorts de serrage.

2. Dispositif (10) selon la revendication 1, dans lequel le ressort de serrage (150) comporte un corps vertical pourvu d'un élément compressible (155) faisant saillie vers l'extérieur à partir du corps du ressort de serrage (150), qui est compressible contre le corps vertical du ressort de serrage (150) ou dans la direction de celui-ci.

3. Dispositif (10) selon la revendication 2, dans lequel l'élément compressible (155) est placé à un angle aigu par rapport au corps vertical du ressort de serrage (150) ; de préférence un angle compris entre au moins 1° et au plus 45°, plus préférablement entre 3° et 30°, encore plus préférablement entre 4° et 25°, encore plus préférablement entre 5° et 20°, encore plus préférablement entre 9° et 15°, par exemple 11°.

4. Dispositif (10) selon l'une des revendications 1 à 3, dans lequel le cadre de suspension (200) est pourvu d'au moins deux ouvertures de désaccouplement des deux côtés du cadre de suspension (200), conçues de telle sorte que les ressorts de serrage (150) puissent être désaccouplés à travers les ouvertures de désaccouplement ; de préférence formées sur une paroi de cadre extérieure du cadre de suspension (200).

5. Dispositif (10) selon l'une des revendications 1 à 4, dans lequel le cadre de panneau (100) comprend une plaque de suspension latéralement saillante (160) à laquelle le câble de suspension (250) peut être attaché, de préférence de manière répétée ; de préférence dans lequel la plaque de suspension (160) est formée sur une paroi de cadre intérieure du cadre de panneau (100).

6. Dispositif (10) selon l'une des revendications 1 à 5, dans lequel la seconde extrémité du câble de suspension (250) est pourvue d'une agrafe, d'un crochet, d'un œillet ou d'une boucle de fixation.

7. Dispositif (10) selon l'une des revendications 1 à 6, dans lequel le cadre de suspension (200) comprend une plaque de support ou d'appui (230), contre laquelle est disposé le cadre de panneau (100) ; de préférence dans lequel la plaque de support ou d'appui (230) est formée sur une paroi de cadre inférieure du cadre de suspension (200) .

8. Système de chauffage comprenant :
- le dispositif (10) selon l'une des revendications 1 à 7,
- un panneau chauffant (50) ; et
- facultativement, une source d'énergie (70) pour l'alimentation du panneau chauffant (50).

9. Système de chauffage selon la revendication 8, dans lequel le panneau chauffant (50) comprend une plaque de verre comportant une partie avant et une partie arrière opposée, la partie arrière possédant une couche de peinture, une couche avec des bandes métalliques et une couche chauffante électrique, la couche chauffante électrique contenant un liant dans lequel sont répartis un ou plusieurs additifs conducteurs.

10. Système de chauffage selon la revendication 9, dans lequel le verre de la plaque de verre a une composition dans laquelle la teneur en fer (exprimée sous la forme de Fe₂O₃) n'est pas supérieure à 0,03 % en poids par rapport au poids total du verre et une teneur en cuivre non supérieure à 0,15 %, le pourcentage en poids (% en poids) étant exprimé par rapport au poids total du verre, et/ou dans lequel la transmission d'énergie, mesurée pour une épaisseur du verre de 3,85 mm selon ISO9050 et une plage de longueurs d'onde allant de 300 à 2500 nm, est d'au moins 90 %.

11. Système de chauffage selon l'une des revendications 9 et 10, dans lequel le liant de la couche chauffante est un polymère non conducteur et/ou les bandes métalliques sont des bandes de cuivre et/ou les additifs conducteurs sont choisis dans le groupe constitué du graphite, du noir de carbone et d'une combinaison des deux et/ou le verre a une composition contenant 60 à 78 % de SiO₂, 0 à 10 % d'Al₂O₃, 0 à 5 % de B₂O₃, 0 à 15 % de CaO, 0 à 10 % de MgO, 5 à 20 % de Na₂O, 0 à 10 % de K₂O, et 0 à 5 % de BaO, le pourcentage en poids (% en poids) étant exprimé par rapport au poids total du verre.

12. Procédé pour le montage d'un panneau chauffant (50) au moyen d'un dispositif (10) selon l'une des revendications 1 à 7, le procédé comprenant les étapes suivantes :
(a) facultativement, attacher un panneau chauffant (50) à un cadre de panneau (100) ; de préférence l'attacher au moyen d'une attache, tel qu'un clou ou une vis ;
(b) facultativement, attacher un cadre de suspension (200) à une surface, telle qu'un mur ou un plafond ; de préférence l'attacher au moyen d'une attache, tel qu'un clou ou une vis ;
(c) attacher un câble de suspension (250) du cadre de suspension (200) à un premier côté du cadre de panneau (100) pour suspendre le cadre de panneau (100) ; de préférence l'attacher à une plaque de suspension latéralement saillante (160) formée à proximité d'un premier ressort de serrage (150a) ou sur celui-ci ;
(d) accoupler un second côté opposé du cadre de panneau (100) au cadre de suspension (200) ; de préférence en serrant un second ressort de serrage opposé (150b) dans le cadre de suspension (200) ;
(e) accoupler le premier côté du cadre de panneau (100) au cadre de suspension (200) ; de préférence en serrant le premier ressort de serrage (150a) dans le cadre de suspension (200).

13. Procédé pour le démontage d'un panneau chauffant (50) d'un dispositif (10) selon l'une des revendications 1 à 7, le procédé comprenant les étapes suivantes :
(A) désaccoupler du cadre de suspension (200) un premier côté du cadre de panneau (100) ; de préférence en séparant du cadre de suspension (200) un premier ressort de serrage (150a) ;
(B) étendre un câble de suspension (250a) formé entre le cadre de panneau (100) et le cadre de suspension (200) afin de suspendre le cadre de panneau (100) ; de préférence en permettant un abaissement du premier côté du cadre de panneau (100) ;
(C) désaccoupler du cadre de suspension (200) un second côté opposé du cadre de panneau (100) ; de préférence en séparant du cadre de suspension (200) un second ressort de serrage opposé (150b) ;
(D) facultativement, permettre un abaissement du second côté du cadre de panneau (100) ;
(E) détacher du cadre de suspension (200) du cadre de panneau (100) le câble de suspension (250) ;
(F) facultativement, libérer le panneau chauffant (50) du cadre de panneau (100).

14. Utilisation d'un dispositif (10) selon l'une des revendications 1 à 7 pour le montage et/ou le démontage d'un panneau chauffant (50) sur ou d'une surface, telle qu'un mur ou un plafond.

15. Utilisation d'un système de chauffage selon l'une des revendications 8 à 11 pour chauffer un espace et/ou un objet.
